# EUROPEAN PATENT SPECIFICATION

(11) **EP 1 685 484 B1**
(45) Date of publication and mention of the grant of the patent: **05.03.2008**
(21) Application number: 04765854.7
(22) Date of filing: 06.10.2004
(51) Int. Cl.: G06F 9/46, G06F 13/16

(54) **MEMORY INTERFACE FOR SYSTEMS WITH MULTIPLE PROCESSORS AND ONE MEMORY SYSTEM**
SPEICHERSCHNITTSTELLE FÜR SYSTEME MIT MEHREREN PROZESSOREN UND EINEM SPEICHERSYSTEM
INTERFACE DE MEMOIRE POUR DES SYSTEMES A MULTIPLES PROCESSEURS ET SYSTEME A MEMOIRE UNIQUE

(30) Priority: 08.10.2003 US 509503 P; 09.10.2003 US 510074 P; 19.12.2003 US 530960 P; 27.05.2004 US 857319
(43) Date of publication of application: 02.08.2006
(73) Proprietor: TELEFONAKTIEBOLAGET LM ERICSSON (publ), 164 83 Stockholm (SE)
(72) Inventor: ANGSMARK, Fredrik, S-222 37 Lund (SE); NILSSON, Tord, S-224 71 Lund (SE); BARROW, David, Durham, NC 27713 (US)
(74) Representative: Bratt, Hanna Catharina
(86) International application number: PCT/EP2004/011163
(87) International publication number: WO 2005/041042

(56) References cited:
- EP-A- 1 132 818
- US-A- 4 164 787
- US-A- 5 010 476
- US-A- 5 659 688
- US-A1- 2001 029 590
- US-A1- 2002 166 017
- HU W-M ED - INSTITUTE OF ELECTRICAL AND ELECTRONICS ENGINEERS: "Lattice scheduling and covert channels" PROCEEDINGS OF THE COMPUTER SOCIETY SYMPOSIUM ON RESEARCH IN SECURITY AND PRIVACY. OAKLAND, MAY 4 - 6, 1992, LOS ALAMITOS, IEEE COMP. SOC. PRESS, US, vol. SYMP. 13, 4 May 1992 (1992-05-04), pages 52-61, XP010029003 ISBN: 0-8186-2825-1
- OLUKOTUN K ET AL: "THE CASE FOR A SINGLE-CHIP MULTIPROCESSOR" ACM SIGPLAN NOTICES, ASSOCIATION FOR COMPUTING MACHINERY, NEW YORK, US, vol. 31, no. 9, September 1996 (1996-09), pages 2-11, XP000639220 ISSN: 0362-1340
- ANONYMOUS: "Re: Intel Researches On-Chip Multiprocessing" INTERNET ARTICLE, [Online] 21 August 2002 (2002-08-21), pages 1-1, XP002344400 Retrieved from the Internet: URL:http://www.aceshardware.com/forums/rea d_post.jsp?id=80028062&forumid=1> [retrieved on 2005-09-09]
- RECHENBERGER, P ET AL: "Informatik-Handbuch" 2002, HANSER , XP002344402 ISBN: 3-446-21842-4 page 317, line 19 - line 21

## Description

### CROSS REFERENCE TO RELATED APPLICATIONS

This Application claims priority from U.S. Provisional Application Nos. 60/509,503, filed October 8, 2003; 60/510,074, filed October 9, 2003; and 60/530,960, filed December 19, 2003, all bearing the title "High Performance and Reliability Memory Interface for Systems with Multiple CPUs and One Memory."

### BACKGROUND

### TECHNICAL FIELD

The present invention relates to memory systems and, in particular, to an interface for a memory system that is accessible by multiple processors.

### HISTORY OF RELATED ART

A control processor (CPU) requires memory in order to operate. The memory may be on the same integrated circuit or "chip" with the CPU, as in the case of a digital application specific integrated circuit (ASIC), or it may be located externally. On-chip memory has the advantage of being faster than external memory, but is more expensive and not very scalable. Thus, the amount of on-chip memory in most digital ASICs is relatively small. External memory, on the other hand, costs less and is scalable. Therefore, a relatively large amount of external memory is usually provided in addition to any on-chip memory that may be present. A communication bus facilitates data transfer to and from the CPU and the external memory. The communication bus is typically controlled by an external memory interface that regulates access to the communication bus.

In some systems, there may be more than one CPU, with each CPU requiring access to memory. To keep the total system cost down for such systems, the CPUs may need to share the same external memory. For example, in certain systems, the control processor and a direct memory access controller access the same external memory. Since only one CPU may control the external memory at a time, a number of challenges are placed on the design of the memory interface. In particular, the memory interface needs to be able to give each CPU a certain minimum required bandwidth to the external memory. The memory interface also needs to be able to handle simultaneous access to the external memory. Other challenges include refreshing the memory (i.e., which CPU will perform the refresh), preventing one CPU from modifying another CPU's data, determining the wait time or latency for each CPU, and the like.

Existing memory interfaces use an asynchronous request-and-grant system to handle multiple CPUs. Typically, when one CPU needs to access the external memory, that CPU sends a memory access request signal to the memory interface. The memory interface sends a reply signal back to the CPU acknowledging that the request has been received. The memory interface then decides whether the request may be granted based on some predefined scheme. The scheme may be, for example, a first-in-first-out scheme, a priority-based scheme, a random access scheme, and the like. The memory interface thereafter sends a grant signal to the CPU, and the CPU may reply by sending an acknowledgement signal back to the memory interface. The access to the external memory may then take place.

EP 1 132 818 discloses an arbitration method and system for allowing multiple processors to access a shared memory. The method comprises defining a first time slot and a second time slot; granting access to the shared memory to a first processor during the first predefined time slot, and granting access to the shared memory to a second processor during the second predefined time slot.

### SUMMARY OF THE INVENTION

A memory interface provides predefined time slots in which each of a plurality of CPUs may access the external memory. A time slot assigned to each CPU may be defined according to the expected memory requirements of the CPU. Each CPU is guaranteed to have a certain amount of dedicated bandwidth to the external memory. The predefined time slots allow the latency of the system to be known, which is useful for real-time oriented applications. Moreover, each CPU may use its own clock during its allotted time slot to control the external memory, thus accommodating various clock domains in the system. Memory refresh and data protection functions are also provided.

In general, in one aspect, the invention is directed to a method of granting access to a single external memory from multiple control processors. The method comprises the steps of defining a first time slot and a second time slot, granting access to the external memory to a first control processor during the first predefined time slot, and granting access to the external memory to a second control processor during the second predefined time slot.

In general, in one aspect, the invention is directed to a memory interface for allowing multiple control processors to access a single external memory. The memory interface comprises a first control processor, a second control processor, and an arbiter inter-operably connected to and synchronized with one of the first and second control processors. The arbiter is configured to grant access to the external memory to the first control processor during a first predefined time slot and grant access to the external memory to the second control processor during the second predefined time slot.

It should be emphasized that the term comprises/comprising, when used in this specification, is taken to specify the presence of stated features, integers, steps, or components, but does not preclude the presence or addition of one or more other features, integers, steps, components, or groups thereof.

### BRIEF DESCRIPTION OF THE DRAWINGS

The foregoing and other advantages of the invention will become apparent from the following Detailed Description and upon reference to the Drawings, wherein:
FIGURE 1 illustrates a block diagram of an exemplary memory interface having a separate memory controller for each CPU; and
FIGURE 2 illustrates a block diagram of another exemplary memory interface having a single memory controller for all CPUs.

### DESCRIPTION OF ILLUSTRATIVE EMBODIMENTS OF THE INVENTION

Following is a Detailed Description of Illustrative Embodiment(s) of the invention with reference to the drawings wherein the same reference labels are used for the same or similar elements. As used herein, the term "access", when used in conjunction with the term "external memory", means and refers to any memory operation, including, but not necessarily limited to, read operations, write operations, and refresh operations.

While asynchronous request-and-grant systems work reasonably well, improvements in several areas are desirable. For example, various handshakes that take place between the CPU and the memory interface can consume valuable bandwidth. In addition, it is difficult to predict the latency of the system with any accuracy for a given CPU because the memory access, once granted, is usually not interrupted until the CPU is finished. This unknown and potentially long wait time may cause problems for other CPUs, especially in real-time-oriented applications.

Therefore, a memory interface may use predefined time slots to grant external memory access to the CPUs. The time slot assigned to each CPU may be defined according to the expected memory needs of the CPU. In this way, each CPU is guaranteed to have a minimum amount of dedicated bandwidth to the external memory. Having predefined time slots also allows the latency of the system to be known, which is useful for real-time-oriented applications.

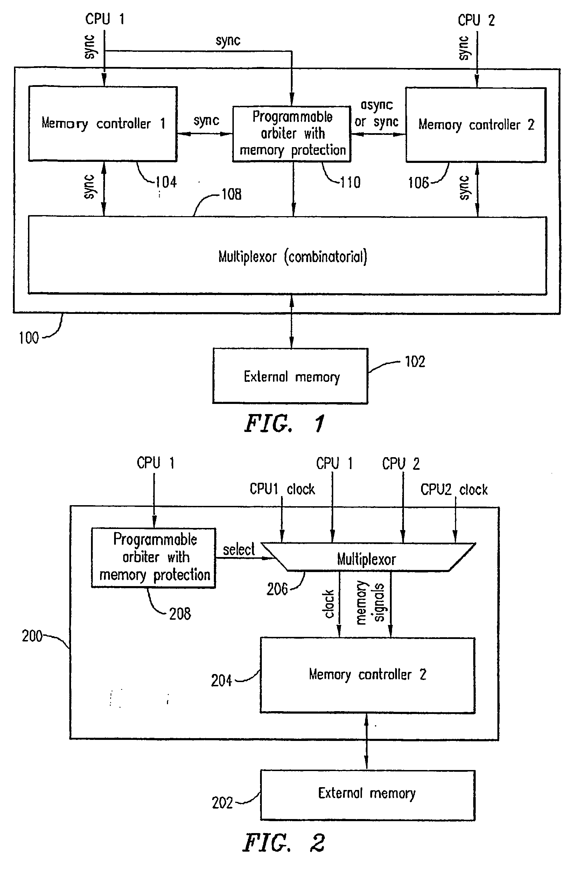

Referring now to FIGURE 1, a block diagram illustrating a memory interface 100 is shown. The memory interface 100 connects a first CPU (CPU1) and a second CPU (CPU2) to a single external memory 102. Both CPU1 and CPU2 may reside on a single chip, as in the case of many digital ASICs, or CPU1 and CPU2 may reside on a separate chips. Where CPU1 and CPU2 reside on a single chip, the memory interface 100 may be located on the same chip as the CPUs, or the memory interface 100 may be located on a separate chip. CPU1 and CPU2 may perform the same functions, or each CPU may perform a different function (e.g., network access versus applications execution). In the latter case, CPU1 and CPU2 may have different clock frequencies, as well as different bandwidth requirements with respect to the external memory 102.

The memory interface 100 includes a separate memory controller for each of CPU1 and CPU2. Thus, in the example of FIGURE 1, CPU1 is connected to one memory controller 104, while CPU2 is connected to another memory controller 106. The memory controllers 104 and 106 may be any suitable memory controller capable of providing appropriate control signals, including write-enable, read-enable, memory address, data, and the like, to the external memory 102. Each of the memory controllers 104 and 106 is connected to the external memory 102 via a multiplexer 108, which may be, for example, a combinatorial multiplexer.

An arbiter 110 is connected to the multiplexer 108. The arbiter 110 may be any suitable logic device and is configured to control which one of the memory controller 104 or 106 is multiplexed to the external memory 102 at any given time. Access to the external memory 102 is granted on a time slot basis where the memory controller 104 or the memory controller 106 is enabled for a specific amount of time. The length of the time slots may be predefined, for example, according to the external-memory requirements of the CPU, the clock frequency of the CPU, or some other factor. Each CPU thus has a certain minimal bandwidth and a certain maximum latency with respect to the external memory 102. The arbiter 110 may also be programmable, such that the length of the time slots may be adjusted from time to time as needed.

In operation, each of the memory controllers 104 and 106 is synchronized with CPU1 or CPU2. In other words, the memory controller 104 is synchronized with CPU1 and the memory controller 106 is synchronized with CPU2, such that each memory controller operates according to the clock frequency of its respective CPU. Thus, when a CPU (e.g., CPU1 or CPU2) is granted access to the external memory 102, there is a synchronous path from the CPU to the external memory 102 and back. In a similar way, the arbiter 110 is also synchronized with one of the CPUs (e.g., CPU1). Usually, the arbiter 110 is synchronized with the CPU with the fastest clock in order to achieve the highest time slot resolution. The arbiter 110 is also synchronized with the memory controller (e.g. memory controller 104) for that CPU, but not necessarily with the memory controller for the other CPU(s).

When either of CPU1 or CPU2 wishes to access the external memory 102, the accessing CPU simply provides the desired address(es) to the respective memory controller (i.e., the memory controller 104 or 106). If a write operation is involved, the accessing CPU also provides the data to be written to the external memory 102. In any case, no request-and-grant handshake needs to take place between the accessing CPU and the respective memory controller because the respective memory controller is dedicated to the accessing CPU. When the accessing CPU's time slot begins, the arbiter 110 sends an enabling signal to the respective memory controller and causes the multiplexer 108 to multiplex the control signals from that memory controller to the external memory 102. Typically, a "ready" or "data available" or "wait" signal is used to indicate when the current data transfer (data written or data read) is complete. This allows the CPU to access the data without having to know the exact latency. Thereafter, the memory operation proceeds as normal until the time slot expires, and the process is repeated in the next CPU's time slot.

To ensure that the data for each of CPU1 and CPU2 is protected, in some embodiments of the invention, the arbiter 110 may include registers (not expressly shown) that contain memory parameters for each of CPU1 and CPU2. The registers may define, for example, which areas of the external memory 102 are accessible by what CPU, and which areas of the external memory 102 are accessible by both CPUs. When a memory controller receives the desired address(es) from a CPU, the memory controller forwards the received address information to the arbiter 110. The arbiter 110 thereafter checks the address information against information stored in the registers of the arbiter 110 and determines whether the CPU has permission to access that area of the external memory 102. If yes, then the arbiter 110 allows the memory operation to proceed as normal. If no, the arbiter 110 disables the memory controller and an error condition is reported to the CPU.

In some embodiments of the invention, the arbiter 110 may also include a refresh function for the external memory 102. Such memory refresh functions are well known to persons having ordinary skill in the art and will not be described further. As another option, the refresh function may reside on one of the CPUs, for example, the CPU to which the arbiter 110 is connected, and is performed during the CPU's memory-access time slot.

Although only two CPUs are shown in FIGURE 1, persons having ordinary skill in the art will understand that additional CPUs may be added as needed. Moreover, although a separate memory controller is shown for each CPU, the ordinarily skilled artisan will recognize a single memory controller may also be used, as described below.

Referring now to FIGURE 2, a memory interface 200 for use with a single memory controller is shown. The memory interface 200 is similar to the memory interface 100 of FIGURE 1 in that it connects a first CPU (CPU1) and a second CPU (CPU2) to a single external memory 202. However, instead of a separate memory controller for each of CPU1 and CPU2, the memory interface 200 includes a single memory controller 204 for both of CPU1 and CPU2. A multiplexer 206 multiplexes each CPU along with the clock signal for that CPU to the memory controller 204. As before, no request-and-grant handshake is needed between the CPUs and the memory controller 204, since the memory controller is effectively dedicated to a single CPU by virtue of the multiplexer 206. An arbiter 208 controls which one of CPUs is multiplexed by the multiplexer 206 to the memory controller 204 on a time slot basis.

To overcome the problem of different clock domains (and potentially reduced bandwidth), the clocks used by the memory controller 204 are selected from the accessing CPUs. Thus, the logic in the memory controller 204 will run synchronously with the accessing CPU, even if CPU1 and CPU2 are running asynchronously relative to one another.

Another difference between FIGURE 2 and FIGURE 1 is that, in FIGURE 2, the area equaling that of one memory controller per CPU is saved. Also, the control functionality of the memory itself (e.g., bank select, etc) may be simpler when there is only one memory controller. On the other hand, use of multiple memory controllers as in FIGURE 1 may have an advantage in that it keeps the state of the memory controllers when another CPU is given access.

In some embodiments of the invention, a CPU may be temporarily given a longer time slot than usual, depending on the needs of the various CPUs. For example, where one CPU is performing real-time tasks, that CPU should be guaranteed a fixed allocation of the memory interface memory transactions, while the other CPU allocations are more flexible. However, in instances where the real-time CPU may be experiencing periods of little activity, and these periods coincide with program switching on the other CPUs that require frequent memory access, the other CPUs may be granted a greater than normal share of external memory access. Therefore, an arbiter may be designed to extend the time slots assigned to the other CPUs on a temporary basis when inactivity is detected in the real-time CPU. As another option, instead of time slots, the arbiter may be designed to grant the other CPUs an additional number of memory transactions. Once the temporary allocation has expired, then the arbiter could, for example, revert back to a fixed allocation.

In addition to their memory access control functions, the arbiters described above may also serve a gatekeeper function. For example, in some embodiments, the arbiters may be used to control the manner in which applications running on one of the CPUs, such as CPU2 whose clock is not synchronized with the arbiter, may access the external memory. Specifically, when these applications wish to access data or program code stored in the external memory, the arbiters may require the applications to first authenticate (via CPU2) the data or program code stored in the external memory before granting the applications access to the memory area in which that data or program code has been stored. The authentication may be performed, for example, using any suitable technique known to persons having ordinary skill in the art. In this manner, if the data or program code that was stored in external memory is valid (i.e., it can be authenticated by the applications), the arbiters will make the data or program code available to the applications. Invalid data or program code (i.e., data or program code that cannot be authenticated), however, will not be made available to the application so as to prevent the invalid data or program code from causing any mischief or damage to the system.

While the present invention has been described with reference to one or more particular embodiments, those skilled in the art will recognize that many changes may be made thereto without departing from the scope of the present invention. Each of these embodiments and obvious variations thereof is contemplated as falling within the scope of the claimed invention, which is set forth in the following claims.

## Claims

1. A method of granting access to a single external memory (102) from multiple control processors (CPU 1, CPU 2), wherein each control processor (CPU 1, CPU 2) is granted access to the single external memory (102) during an assigned time slot, the method **characterized by**:
granting access to the external memory (102) to a first control processor (CPU 1) via a first memory controller (104) during a first predefined time slot; and
granting access to the external memory (102) to a second control processor (CPU 2) via a second memory controller (106) during a second predefined time slot;
**characterized in that** the first and second memory controllers (104, 106) include a first clock and a second clock, respectively, and the first and second clocks of the first and second memory controllers (104, 106) are synchronized with a first clock and a second clock of the first and second control processors (CPU 1, CPU 2), respectively.

2. The method according to claim 1, wherein the steps of granting access include multiplexing the first and second memory controllers (104, 106) to the external memory (102) during the first and second time slots, respectively.

3. The method according to claim 1, further comprising defining areas within the external memory (102) accessible by each of the first and second control processors (CPU 1, CPU 2).

4. The method according to claim 3, further comprising:
preventing the first control processor (CPU 1) from accessing an area within the external memory accessible by the second control processor (CPU 2); and
preventing the second control processor (CPU 2) from accessing an area within the external memory accessible by the first control processor (CPU 1).

5. The method according to claim 1, further comprising implementing the first and second control processors (CPU 1, CPU 2) on a single integrated circuit.

6. The method according to claim 1, further comprising providing first and second control processors (CPU 1, CPU 2) having different clock frequencies.

7. The method according to claim 1, further comprising adjusting a length of the first time slot and/or the second time slot based on a memory access activity of the first and/or second control processors (CPU 1, CPU 2), respectively.

8. The method according to claim 1, wherein the external memory (102) has a clock that is synchronized with the clock of whichever memory controller (104, 106) is granted access to the external memory.

9. The method according to claim 1, further comprising requiring the second control processor (CPU 2) to authenticate data or program code for which access to the external memory (102) is desired before granting the second control processor (CPU 2) access to the external memory (102).

10. A method of granting access to a single external memory (202) from multiple control processors (CPU 1, CPU 2), wherein each control processor (CPU 1, CPU 2) is granted access to the single external memory (202) during an assigned time slot, the method **characterized by**:
multiplexing by a single memory controller (204), a first control processor (CPU 1) and a second control processor (CPU 2) to the external memory (202) during a first time slot and a second time slot, respectively, wherein a first clock of the first control processor (CPU 1) and a second clock of the second control processor (CPU 2) are multiplexed to the external memory (202) during the first and second time slots, respectively.

11. A memory interface (100) for allowing multiple control processors (CPU 1, CPU 2) to access a single external memory (102), wherein each control processor (CPU 1, CPU 2) is granted access to the single external memory (102) during an assigned time slot, said memory interface (100) **characterized by**:
a first processor clock for a first control processor (CPU 1);
a second processor clock for a second control processor (CPU 2);
a first memory controller (104) having a first controller clock;
a second memory controller (106) having a second controller clock;
an arbiter (110) inter-operably connected to and synchronized with one of the first and second control processors (CPU 1, CPU 2), wherein the arbiter (110) is configured to:
grant access to the external memory (102) to the first control processor (CPU 1) via the first memory controller (104) during a first predefined time slot; and
grant access to the external memory (102) to the second control processor (CPU 2) via the second memory controller (106) during a second predefined time slot;
wherein the first and second controller clocks of the first and second memory controllers (104, 106) are synchronized with the first and second processor clocks of the first and second control processors (CPU 1, CPU 2), respectively.

12. The memory interface according to claim 11, further comprising a multiplexer (108) configured to multiplex the first and second memory controllers (104, 106) to the external memory (102) during the first and second time slots, respectively.

13. The memory interface (100) according to claim 11, wherein the arbiter (110) is further configured to define areas within the external memory (102) accessible by each of the control processors (CPU 1, CPU 2).

14. The memory interface (100) according to claim 11, wherein the arbiter (110) is further configured to prevent the first control processor (CPU 1) from accessing an area within the external memory accessible by the second control processor (CPU 2), and vice versa.

15. The memory interface (100) according to claim 11, wherein the first and second control processors (CPU 1, CPU 2) reside on a single integrated circuit.

16. The memory interface (100) according to claim 11, wherein the first and second control processors (CPU 1, CPU 2) have different clock frequencies.

17. The memory interface (100) according to claim 11, wherein the arbiter (110) is further configured to adjust a length of the first time slot and/or the second time slot based on a memory access activity of the first and/or second control processors (CPU 1, CPU 2), respectively.

18. The memory interface (100) according to claim 11, wherein the external memory (102) has a clock that is synchronized with the clock of whichever memory controller (104, 106) is granted access to the external memory (102).

19. The memory interface according to claim 11, further comprising means for requiring the second control processor (CPU 2) to authenticate data or program code for which access to the external memory (102) is desired before granting the second control processor (CPU 2) access to the external memory (102).

20. A memory interface (200) for allowing multiple control processors (CPU 1, CPU 2) to access a single external memory (202), wherein a first control processor (CPU 1) and a second control processor (CPU 2) are granted access to the single external memory (202) during an assigned time slot by a single memory controller (204), said memory interface (200) **characterized by**:
an arbiter (208) inter-operably connected to and synchronized with one of the first and second control processors (CPU 1, CPU 2), wherein the arbiter (208) is configured to:
grant access to the external memory (202) to the first control processor (CPU 1) via the memory controller (204) during a first predefined time slot; and
grant access to the external memory (202) to the second control processor (CPU 2) via the memory controller (204) during the second predefined time slot; and
a multiplexer (206) configured to multiplex a first clock and a second clock of the first and second processors (CPU 1, CPU 2), respectively, to the external memory (202) during the first and second time slots.

21. The memory interface according to claim 20, wherein the multiplexer (206) is configured to multiplex the first and second control processors (CPU 1, CPU 2) to the external memory (202) during the first and second time slots, respectively.

## Patentansprüche

1. Verfahren zum Bewilligen eines Zugriffes auf einen einzelnen externen Speicher (102) von mehreren Steuerprozessoren (CPU 1, CPU 2), wobei jedem Steuerprozessor (CPU 1, CPU 2) ein Zugriff auf den einzelnen externen Speicher (102) während eines zugewiesenen Zeitschlitzes bewilligt wird, wobei das Verfahren **gekennzeichnet ist durch**:
Bewilligen eines Zugriffes auf den externen Speicher (102) an einen ersten Steuerprozessor (CPU 1) über eine erste Speichersteuerung (104) während eines ersten vorbestimmten Zeitschlitzes; und
Bewilligen eines Zugriffes auf den externen Speicher (102) an einen zweiten Steuerprozessor (CPU 2) über eine zweite Speichersteuerung (106) während eines zweiten vorbestimmten Zeitschlitzes;
**dadurch gekennzeichnet, dass** die erste und zweite Speichersteuerung (104, 106) jeweils einen ersten Takt und einen zweiten Takt enthalten, und der erste und zweite Takt von der ersten und zweiten Speichersteuerung (104, 106) jeweils mit einem ersten Takt und einem zweiten Takt von dem ersten und zweiten Steuerprozessor (CPU 1, CPU 2) synchronisiert werden.

2. Verfahren nach Anspruch 1, bei welchem die Schritte des Bewilligens eines Zugriffes ein Multiplexen von der ersten und zweiten Speichersteuerung (104, 106) an den externen Speicher (102) jeweils während des ersten und zweiten Zeitschlitzes enthalten.

3. Verfahren nach Anspruch 1, welches ferner ein Definieren von Bereichen innerhalb des externen Speichers (102), welcher durch jeden von dem ersten und zweiten Steuerprozessor (CPU 1, CPU 2) zugreifbar ist, enthält.

4. Verfahren nach Anspruch 3, welches ferner enthält:
Verhindern, dass der erste Steuerprozessor (CPU 1) auf einen Bereich innerhalb des externen Speichers zugreift, welcher durch den zweiten Steuerprozessor (CPU 2) zugreifbar ist; und
Verhindern, dass der zweite Steuerprozessor (CPU 2) auf einen Bereich innerhalb des externen Speichers zugreift, welcher durch den ersten Steuerprozessor (CPU 1) zugreifbar ist.

5. Verfahren nach Anspruch 1, welches ferner ein Implementieren des ersten und zweiten Steuerprozessors (CPU 1, CPU 2) auf eine einzelne integrierte Schaltung enthält.

6. Verfahren nach Anspruch 1, welches ferner ein Bereitstellen eines ersten und zweiten Steuerprozessors (CPU 1, CPU 2) enthält, welche unterschiedliche Taktfrequenzen haben.

7. Verfahren nach Anspruch 1, welches ferner ein Einstellen von einer Länge von dem ersten Zeitschlitz und/oder dem zweiten Zeitschlitz basierend auf einer Speicherzugriffsaktivität von jeweils dem ersten und/oder zweiten Steuerprozessor (CPU 1, CPU 2) enthält.

8. Verfahren nach Anspruch 1, bei welchem der externe Speicher (102) einen Takt hat, welcher mit dem Takt von jeglicher Speichersteuerung (104, 106) synchronisiert ist, welcher ein Zugriff auf den externen Speicher bewilligt ist.

9. Verfahren nach Anspruch 1, welches ferner ein Anfordern an den zweiten Steuerprozessor (CPU 2) zum Authentifizieren von Daten oder einem Programmcode, für welchen ein Zugriff auf den externen Speicher (102) gewünscht wird, bevor dem zweiten Steuerprozessor (CPU 2) ein Zugriff auf den externen Speicher (102) bewilligt wird, enthält.

10. Verfahren zum Bewilligen eines Zugriffes auf einen einzelnen externen Speicher (202) von mehreren Steuerprozessoren (CPU 1, CPU 2), wobei jedem Steuerprozessor (CPU 1, CPU 2) ein Zugriff auf den einzelnen externen Speicher (202) während eines zugewiesenen Zeitschlitzes bewilligt wird, wobei das Verfahren **gekennzeichnet ist durch**:
Multiplexen, **durch** eine einzelne Speichersteuerung (204), von einem ersten Steuerprozessor (CPU 1) und einem zweiten Steuerprozessor (CPU 2) an den externen Speicher (202), jeweils während eines ersten Zeitschlitzes und eines zweiten Zeitschlitzes, wobei ein erster Takt von dem ersten Steuerprozessor (CPU 1) und ein zweiter Takt von dem zweiten Steuerprozessor (CPU 2) an den externen Speicher (202) jeweils während des ersten und zweiten Zeitschlitzes gemultiplext werden.

11. Speicherschnittstelle (100), um mehreren Steuerprozessoren (CPU 1, CPU 2) einen Zugriff auf einen einzelnen externen Speicher (102) zu erlauben,
wobei jedem Steuerprozessor (CPU 1, CPU 2) ein Zugriff auf den einzelnen externen Speicher (102) während eines zugewiesenen Zeitschlitzes bewilligt ist, wobei die Speicherschnittstelle (100) **gekennzeichnet ist durch**:
einen ersten Prozessortakt für einen ersten Steuerprozessor (CPU 1);
einen zweiten Prozessortakt für einen zweiten Steuerprozessor (CPU 2);
eine erste Speichersteuerung (104), welche einen ersten Steuertakt hat;
eine zweite Speichersteuerung (106), welche einen zweiten Steuertakt hat;
eine Schlichtereinrichtung (110), welche im Zwischenbetrieb mit einem aus dem ersten und zweiten Steuerprozessor (CPU 1, CPU 2) verbunden und damit synchronisiert ist, wobei die Schlichtereinrichtung (110) dazu konfiguriert ist, um:
einen Zugriff auf den externen Speicher (102) an den ersten Steuerprozessor (CPU 1) über die erste Speichersteuerung (104) während eines ersten vorbestimmten Zeitschlitzes zu bewilligen; und
einen Zugriff auf den externen Speicher (102) an den zweiten Steuerprozessor (CPU 2) über die zweite Speichersteuerung (106) während eines zweiten vorbestimmten Zeitschlitzes zu bewilligen;
wobei der erste und zweite Steuertakt von der ersten und zweiten Speichersteuerung (104, 106) jeweils mit dem ersten und zweiten Prozessortakt von dem ersten und zweiten Steuerprozessor (CPU 1, CPU 2) synchronisiert sind.

12. Speicherschnittstelle nach Anspruch 11, welche ferner einen Multiplexer (108) enthält, welcher dazu konfiguriert ist, um die erste und zweite Speichersteuerung (104, 106) an den externen Speicher (102) jeweils während des ersten und zweiten Zeitschlitzes zu multiplexen.

13. Speicherschnittstelle (100) nach Anspruch 11, bei welcher die Schlichtereinrichtung (110) ferner dazu konfiguriert ist, um Bereiche innerhalb des externen Speichers (102) zu definieren, welche durch jeden von den Steuerprozessoren (CPU 1, CPU 2) zugreifbar sind.

14. Speicherschnittstelle (100) nach Anspruch 11, bei welcher die Schlichtereinrichtung (110) ferner dazu konfiguriert ist, um zu verhindern, dass der erste Steuerprozessor (CPU 1) auf einen Bereich innerhalb des externen Speichers zugreift, welcher durch den zweiten Steuerprozessor (CPU 2) zugreifbar ist, und umgekehrt.

15. Speicherschnittstelle (100) nach Anspruch 11, bei welcher der erste und zweite Steuerprozessor (CPU 1, CPU 2) auf einer einzelnen integrierten Schaltung vorliegen.

16. Speicherschnittstelle (100) nach Anspruch 11, bei welcher der erste und zweite Steuerprozessor (CPU 1, CPU 2) unterschiedliche Taktfrequenzen haben.

17. Speicherschnittstelle (100) nach Anspruch 11, bei welcher die Schlichtereinrichtung (110) ferner dazu konfiguriert ist, um eine Länge von dem ersten Zeitschlitz und/oder dem zweiten Zeitschlitz basierend auf einer Speicherzugriffaktivität von jeweils dem ersten und/oder zweiten Steuerprozessor (CPU 1, CPU 2) einzustellen.

18. Speicherschnittstelle (100) nach Anspruch 11, bei welcher der externe Speicher (102) einen Takt hat, welcher mit dem Takt von jeglicher Speichersteuerung (104, 106) synchronisiert ist, welcher ein Zugriff auf den externen Speicher (102) bewilligt ist.

19. Speicherschnittstelle nach Anspruch 11, welche ferner ein Mittel enthält, um bei dem zweiten Steuerprozessor (CPU 2) zu erfordern, Daten oder einen Programmcode zu authentifizieren, für welchen ein Zugriff auf den externen Speicher (102) gewünscht ist, bevor dem zweiten Steuerprozessor (CPU 2) ein Zugriff auf dem externen Speicher (102) bewilligt ist.

20. Speicherschnittstelle (200), um mehreren Steuerprozessoren (CPU 1, CPU 2) einen Zugriff auf einen einzelnen externen Speicher (202) zu erlauben,
wobei einem ersten Steuerprozessor (CPU 1) und einem zweiten Steuerprozessor (CPU 2) ein Zugriff auf den einzelnen externen Speicher (202) während eines zugewiesenen Zeitschlitzes durch eine einzelne Speichersteuerung (204) bewilligt ist, wobei die Speicherschnittstelle (200) **gekennzeichnet ist durch**:
eine Schlichtereinrichtung (208), welche im Zwischenbetrieb mit einem aus dem ersten und zweiten Steuerprozessor (CPU 1, CPU 2) verbunden und damit synchronisiert ist, wobei die Schlichtereinrichtung (208) dazu konfiguriert ist, um:
einen Zugriff auf den externen Speicher (202) an den ersten Steuerprozessor (CPU 1) über die Speichersteuerung (204) während eines ersten vorbestimmten Zeitschlitzes zu bewilligen; und
einen Zugriff auf den externen Speicher (202) an den zweiten Steuerprozessor (CPU 2) über die Speichersteuerung (204) während des zweiten vorbestimmten Zeitschlitzes zu bewilligen; und
einen Multiplexer (206), welcher dazu konfiguriert ist, um einen ersten Takt und einen zweiten Takt von jeweils dem ersten und zweiten Prozessor (CPU 1, CPU 2) an den externen Speicher (202) während des ersten und zweiten Zeitschlitzes zu multiplexen.

21. Speicherschnittstelle nach Anspruch 20, bei welcher der Multiplexer (206) dazu konfiguriert ist, um den ersten und zweiten Steuerprozessor (CPU 1, CPU 2) an den externen Speicher (202) jeweils während des ersten und zweiten Zeitschlitzes zu multiplexen.

## Revendications

1. Procédé d'octroi d'accès à une unique mémoire externe (102) à partir de multiples processeurs (CPU 1, CPU 2) de commande, dans lequel chaque processeur (CPU 1, CPU 2) de commande se voit octroyer l'accès à l'unique mémoire externe (102) pendant une tranche de temps affectée, le procédé étant **caractérisé :**
**par** l'octroi de l'accès à la mémoire externe (102) à un premier processeur (CPU 1) de commande via un premier régisseur (104) de mémoire pendant une première tranche prédéfinie de temps ; et
par l'octroi de l'accès à la mémoire externe (102) à un deuxième processeur (CPU 2) de commande via un deuxième régisseur (106) de mémoire pendant une deuxième tranche prédéfinie de temps ;
**caractérisé en ce que** les premier et deuxième régisseurs (104, 106) de mémoire contiennent, respectivement, une première horloge et une deuxième horloge, et **en ce que** les première et deuxième horloges des premier et deuxième régisseurs (104, 106) de mémoire sont synchronisées avec, respectivement, une première horloge et une deuxième horloge des premier et deuxième processeurs (CPU 1, CPU 2).

2. Procédé selon la revendication 1, dans lequel les étapes d'octroi d'accès comprennent le multiplexage des premier et deuxième régisseurs (104, 106) de mémoire en entrée de la mémoire externe (102) pendant les première et deuxième tranches de temps, respectivement.

3. Procédé selon la revendication 1, comprenant en outre des zones de définition dans la mémoire externe (102) accessibles par chacun des premier et deuxième processeurs (CPU 1, CPU 2) de commande.

4. Procédé selon la revendication 3, comprenant en outre :
le fait d'empêcher le premier processeur (CPU 1) de commande d'accéder à une zone de la mémoire externe accessible par le deuxième processeur (CPU 2) de commande ; et
le fait d'empêcher le deuxième processeur (CPU 2) de commande d'accéder à une zone de la mémoire externe accessible par le premier processeur (CPU 1) de commande.

5. Procédé selon la revendication 1, comprenant en outre la mise en oeuvre des premier et second processeurs (CPU 1, CPU 2) de commande sur un unique circuit intégré.

6. Procédé selon la revendication 1, comprenant en outre le fait de prévoir des premier et deuxième processeurs (CPU 1, CPU 2) de commande ayant des fréquences d'horloge différentes.

7. Procédé selon la revendication 1, comprenant en outre l'ajustement de la longueur de la première tranche de temps et/ou de la deuxième tranche de temps en se basant sur une activité d'accès à la mémoire des premier et/ou second processeurs (CPU 1, CPU 2) de commande, respectivement.

8. Procédé selon la revendication 1, dans lequel la mémoire externe (102) possède une horloge qui est synchronisée avec l'horloge de celui, quel qu'il soit, des régisseurs (104, 106) de mémoire auquel est octroyé l'accès à la mémoire externe.

9. Procédé selon la revendication 1, comprenant en outre l'exigence imposée au deuxième processeur (CPU 2) de commande d'authentifier du code de données ou de programme pour lequel l'accès à la mémoire externe (102) est souhaité avant d'octroyer au deuxième processeur (CPU 2) de commande l'accès à la mémoire externe (102).

10. Procédé d'octroi d'accès à une unique mémoire externe (202) à partir de multiples processeurs (CPU 1, CPU 2) de commande, dans lequel chaque processeur (CPU 1, CPU 2) se voit octroyer l'accès à l'unique mémoire externe (202) pendant une tranche de temps affectée, le procédé étant **caractérisé :**
**par** le multiplexage par un unique régisseur (204) de mémoire d'un premier processeur (CPU 1) de commande et d'un deuxième processeur (CPU 2) de commande en entrée de la mémoire externe (202) pendant, respectivement, une première tranche de temps et une deuxième tranche de temps, dans lequel une première horloge du premier processeur (CPU 1) de commande et une deuxième horloge du deuxième processeur (CPU 2) de commande sont multiplexées en entrée de la mémoire externe (202) pendant, respectivement, les première et deuxième tranches de temps.

11. Interface (100) de mémoire destinée à permettre à de multiples processeurs (CPU 1, CPU 2) de commande d'accéder à une unique mémoire externe (102), dans lequel chaque processeur (CPU 1, CPU 2) de commande se voit octroyer l'accès à l'unique mémoire externe (102) pendant une tranche de temps affectée, ladite interface (100) de mémoire étant **caractérisée :**
**par** une première horloge de processeur pour un premier processeur (CPU 1) de commande ;
par une deuxième horloge de processeur pour un deuxième processeur (CPU 2) de commande ;
par un premier régisseur (104) de mémoire ayant une première horloge de régisseur ;
par un deuxième régisseur (106) de mémoire ayant une deuxième horloge de régisseur ;
par un arbitre (110) connecté de façon interfonctionnelle à, et synchronisé avec, l'un des premier et deuxième processeurs (CPU 1, CPU 2) de commande, l'arbitre (110) étant configuré :
pour octroyer l'accès à la mémoire externe (102) au premier processeur (CPU 1) de commande via le premier régisseur (104) de mémoire pendant une première tranche prédéfinie de temps ; et
pour octroyer l'accès à la mémoire externe (102) au deuxième processeur (CPU 2) de commande via le deuxième régisseur (106) de mémoire pendant une deuxième tranche prédéfinie de temps ;
dans laquelle les première et deuxième horloges de régisseur des premier et deuxième régisseurs (104, 106) de mémoire sont synchronisées avec les première et deuxième horloges de processeur des premier et deuxième processeurs (CPU 1, CPU 2) de commande, respectivement.

12. Interface de mémoire selon la revendication 11, comprenant en outre un premier multiplexeur (108) configuré pour multiplexer les premier et deuxième régisseurs (104, 106) de mémoire en entrée de la mémoire externe (102) pendant, respectivement, les première et deuxième tranches de temps.

13. Interface (100) de mémoire selon la revendication 11, dans laquelle l'arbitre (110) est en outre configuré pour définir des zones dans la mémoire externe (102) accessibles par chacun des processeurs (CPU 1, CPU 2) de commande.

14. Interface (100) de mémoire selon la revendication 11, dans laquelle l'arbitre (110) est en outre configuré pour empêcher le premier processeur (CPU 1) de commande d'accéder à une zone de la mémoire externe accessible par le deuxième processeur (CPU 2) de commande, et vice versa.

15. Interface (100) de mémoire selon la revendication 11, dans laquelle les premier et deuxième processeurs (CPU 1, CPU 2) de commande résident sur un unique circuit intégré.

16. Interface (100) de mémoire selon la revendication 11, dans laquelle les premier et deuxième processeurs (CPU 1, CPU 2) ont des fréquences d'horloge différentes.

17. Interface (100) de mémoire selon la revendication 11, dans laquelle l'arbitre (110) est en outre configuré pour ajuster une longueur de la première tranche de temps et/ou de la deuxième tranche de temps en se basant sur une activité d'accès à la mémoire des premier et et/ou deuxième processeurs (CPU 1, CPU 2) de commande, respectivement.

18. Interface (100) de mémoire selon la revendication 11, dans laquelle la mémoire externe (102) possède une horloge qui est synchronisée avec l'horloge de celui, quel qu'il soit, des régisseurs (104, 106) de mémoire auquel est octroyé l'accès à la mémoire externe (102).

19. Interface de mémoire selon la revendication 11, comprenant en outre un moyen destiné à exiger que le deuxième processeur (CPU 2) de commande authentifie du code de données ou de programme pour lequel l'accès à la mémoire externe (102) est souhaité avant d'octroyer au deuxième processeur (CPU 2) de commande l'accès à la mémoire externe (102) .

20. Interface (200) de mémoire destinée à permettre à de multiples processeurs (CPU 1, CPU 2) de commande d'accéder à une unique mémoire externe (202), dans laquelle un premier processeur (CPU 1) de commande et un deuxième processeur (CPU 2) de commande se voient octroyer l'accès à l'unique mémoire externe (202), pendant une tranche de temps affectée, par un unique régisseur (204) de mémoire, ladite interface (200) de mémoire étant **caractérisée :**
**par** un arbitre (208) connecté de façon interfonctionnelle à, et synchronisé avec, l'un des premier et deuxième processeurs (CPU 1, CPU 2) de commande, l'arbitre (208) étant configuré :
pour octroyer l'accès à la mémoire externe (202) au premier processeur (CPU 1) de commande via le régisseur (204) de mémoire pendant une première tranche prédéfinie de temps ; et
pour octroyer l'accès à la mémoire externe (202) au deuxième processeur (CPU 2) de commande via le régisseur (204) de mémoire pendant une deuxième tranche prédéfinie de temps ; et
par un multiplexeur (206) configuré pour multiplexer une première horloge et une deuxième horloge des premier et deuxième processeurs (CPU 1, CPU 2), respectivement, en entrée de la mémoire externe (202) pendant les première et deuxième tranches de temps.

21. Interface de mémoire selon la revendication 20, dans laquelle le multiplexeur (206) est configuré pour multiplexer les premier et deuxième processeurs (CPU 1, CPU 2) de commande en entrée de la mémoire externe (202) pendant les première et deuxième tranches de temps, respectivement.
